# EUROPEAN PATENT SPECIFICATION

(11) **EP 3 781 624 B1**
(45) Date of publication and mention of the grant of the patent: **29.06.2022**
(21) Application number: 19714214.4
(22) Date of filing: 03.04.2019
(51) Int. Cl.: C08L 9/02, C08L 15/00, B60H 1/00

(54) **USE OF VULCANISATES COMPRISING HNBR-PEG ACRYLATE COPOLYMER IN CONTACT WITH COOLANT**
VERWENDUNG VON VULKANISATEN MIT HNBR-PEG-ACRYLAT-COPOLYMER IN KONTAKT MIT EINEM KÜHLMITTEL
UTILISATION DU COPOLYMÈRE HNBR-PEG-ACRYLATE CONTENANT DES VULCANISATS EN CONTACT AVEC UN AGENT DE REFROIDISSEMENT

(30) Priority: 19.04.2018 EP 18168226
(43) Date of publication of application: 24.02.2021
(73) Proprietor: ARLANXEO Deutschland GmbH, 41540 Dormagen (DE)
(72) Inventor: LIEBER, Susanna, 67663 Kaiserslautern (DE); DAVID, Sarah, 41539 Dormagen (DE)
(86) International application number: PCT/EP2019/058372
(87) International publication number: WO 2019/201601

(56) References cited:
- EP-A1- 2 868 676
- EP-A1- 2 868 677
- EP-A1- 3 196 240
- EP-A1- 3 255 088
- WO-A2-02/02657
- US-A- 5 912 288

## Description

The present invention relates to the use of a vulcanisable composition comprising HNBR-PEG acrylate copolymer for production of vulcanisates that are in contact with coolant.

The invention further relates to the use of a vulcanisate produced from a vulcanisable composition comprising HNBR-PEG acrylate copolymer as a component part, preferably as a gasket or as a hose, in contact with coolant.

Rubber materials in automobiles are subjected to high stresses. The demands on rubber materials, for example in gaskets, are becoming ever higher. For instance, a recent demand, for example for electric cars, has been cold flexibility on gaskets down to -40°C. These requirements are also applicable to rubber materials that are in contact with coolant. Conventional rubber materials such as hydrogenated nitrile-butadiene rubbers (HNBR) or EPDM are often unsuitable for these demands since the compositions of modern coolants constitute a further high stress for the rubber materials that lead to loss of cold flexibility over the course of time. The consequence is the loss of sealing properties and the necessity of more frequent changes of the gaskets.

**Coolants** are liquid substances or substance mixtures that are used to transport heat away. The coolant is capable of transporting the enthalpy along the temperature gradient to a site at lower temperature in a cooling cycle. Coolants can cool the material to be cooled directly or via a heat exchanger.

Coolants are typically compositions comprising water, a freezing point depressant, preferably alkylglycol or salts, more preferably ethylene glycol or propylene glycol, and a corrosion inhibitor, preferably neutralized organic acids, more preferably sodium ethylhexanoate.

In conventional coolants, silicates were formerly used as additive. The silicate does prevent corrosion by forming a protective aluminium silicate layer on aluminium parts, but it degrades rapidly and therefore has to be renewed regularly. Newer generations of coolant therefore contain, in place of or as well as the silicate, organic compounds for corrosion protection, since these last for longer.

For a while, what is called OAT (organic acid technology) has been used in coolants. In this technology, neutralized organic acids, for example sodium ethylhexanoate, are being used as additive. At elevated temperature, over the course of time, however, the salt of ethylhexanoic acid forms the free acid. This acid can lead to premature ageing in the case of conventional vulcanisates. One example of a coolant concentrate with OAT is Glysantin^{®} G64^{®} from BASF, which, as well as the main ethylene glycol and sodium isononanoate components, additionally contains benzoate and phosphates and is diluted with water before being used as coolant.

The **prior art** discloses HNBR terpolymers for use at low temperatures, for example in contact with coolant.

For example, EP-A-3255088 discloses the use of vulcanisable compositions for production of a vulcanisate in contact with coolant, for example G13, wherein the vulcanisable composition comprises HNBR, at least one silane-coated wollastonite and at least one peroxide compound.

EP-A-2700692 describes compositions for gaskets that are in contact with coolant, comprising HNBR, with 31% to 50% by weight of acrylonitrile monomers, carbon black, poly-functional crosslinking agent and organic peroxide.

DE-A-102016107592 discloses oil gasket rubber compositions having improved freeze resistance, comprising a hydrogenated nitrile rubber (HNBR) that includes acrylonitrile in a content of 5 to 20 mol%, in which the hydrogen saturation of the HNBR is 80% to 90%. Oil is also understood here to mean coolants.

EP-A-3196240 discloses hydrogenated nitrile-butadiene-PEG acrylate copolymers containing 25% to 38% by weight of α,β-ethylenically unsaturated nitrile units, 40% to 60% by weight of conjugated diene units and 10% to 25% by weight of PEG acrylate units, which are used for gaskets. There is no disclosure of use in vulcanisable compositions for production of vulcanisates that are in contact with coolant.

KR20130003554 discloses a gasket composition not only comprising HNBR but also including ethylene glycol as antifreeze additive.

US5912288 discloses a rubber composition for use with fluorocarbons and/or refrigerating machine oil. Said rubber composition consisting essentially of at least one rubber selected from the group consisting of a nitrile group-containing rubber (like NBR, HNBR and CNBR (carboxylated nitrile rubber)), a chloroprene rubber, and an ethylene propylene rubber as a base and a monofunctional epoxy compound, wherein said monofunctional epoxy compound is mixed in or otherwise incorporated into said base.

However, the prior art does not disclose HNBR-PEG acrylate rubber compositions suitable for the production of vulcanisates that are in contact with coolant.

Accordingly, one problem addressed by the present invention was that of providing HNBR rubber compositions that are suitable for use for production of vulcanisates in contact with coolant. A further problem addressed was that of providing such HNBR rubber compositions that also have a low glass transition temperature.

Regrettably, it is not immediately predictable which HNBR rubber composition will fulfil the requirements.

Conventional HNBR rubber materials, for example the HNBR copolymer rubber Therban^{®} 3407, have **high hardness stability** after storage in coolant. Regrettably, these materials, on account of their **high glass transition temperature** (Tg), do not meet all low-temperature demands in cooling units.

In order to counter elevated low-temperature demands, generally low-temperature types from the Therban^{®}LT series are used. These materials contain butyl acrylate as termonomer, which disrupts the crystallization of the hydrogenated butadiene and hence lowers the glass transition temperature.

However, these known HNBR rubber materials having good low-temperature properties, for example the HNBR terpolymer rubber Therban^{®}LT 1707 VP, show a **significant rise in hardness** after storage in the coolant. At the same time, in the analysis of the storage medium, it was possible to **detect butanol,** which can be formed as a degradation product of the HNBR terpolymer rubber. It was likewise possible in the case of the Therban^{®}LT 1707 VP raw polymer without crosslinking chemicals and admixtures to observe **gelation** on contact with coolant. No butanol was detected on storage of the pure coolant. This suggests transesterification of the butyl acrylate termonomer in the HNBR terpolymer rubber in the coolant and subsequent crosslinking of the rubber. The alkyl acrylate termonomer thus breaks down in the course of storage in the coolant, as a result of which the properties based on the termonomer are also lost with time. Thus, HNBR terpolymer rubbers containing alkyl acrylate termonomer, such as butyl acrylate termonomer, do not seem sufficiently suitable for applications with coolant contact.

The problem addressed was that of providing a material which simultaneously has a low glass transition temperature and, after storage in the coolant, has a small rise in hardness and optionally low gelation after storage of the pure polymer in the coolant.

It has now been found that, surprisingly, HNBR-PEG acrylate copolymers are suitable for use in contact with coolants, since these have a lower glass transition temperature than conventional copolymers and have a small rise in hardness on storage in coolant.

The problem is solved by the present invention in that it provides for the **use of** a **vulcanisable composition** for production of a vulcanisate in contact with coolant, characterized in that the vulcanisable composition comprises
(i) at least one HNBR-PEG acrylate copolymer and
(ii) at least one peroxide compound,

where the HNBR-PEG acrylate copolymer contains
10% to 35% by weight of α,β-ethylenically unsaturated nitrile units,
15% to 80% by weight of conjugated diene units and
10% to 50% by weight of PEG acrylate units,
wherein the coolant is a composition comprising water, a freezing point depressant, and a corrosion inhibitor.

The invention provides for the **use of a vulcanisate** in contact with coolant, characterized in that the vulcanisate contains a peroxidically crosslinked
HNBR-PEG acrylate copolymer, where the HNBR-PEG acrylate copolymer contains
10% to 35% by weight of α,β-ethylenically unsaturated nitrile units,
15% to 80% by weight of conjugated diene units and
10% to 50% by weight of PEG acrylate units.

It should be noted at this point that the scope of the invention includes any and all possible combinations of the components, ranges of values and/or process parameters mentioned above and cited hereinafter, in general terms or within areas of preference.

### Component (i) - HNBR-PEG acrylate copolymer

In the context of this invention, the term "HNBR-PEG acrylate copolymer" is a hydrogenated nitrile-butadiene-PEG acrylate copolymer containing
(a) **10%** to **35%** by weight, preferably 15% to 30% by weight and more preferably 18% to 33% by weight of at least one α,β-ethylenically unsaturated **nitrile unit,**
(b) **15%** to **80%** by weight, preferably 30% to 73% by weight and more preferably 36% to 69% by weight of at least one conjugated **diene unit** and
c) **10%** to **50%** by weight, preferably 12% to 40% by weight and more preferably 13% to 30% by weight of at least one **PEG acrylate unit** derived from a PEG acrylate of the general formula (I) 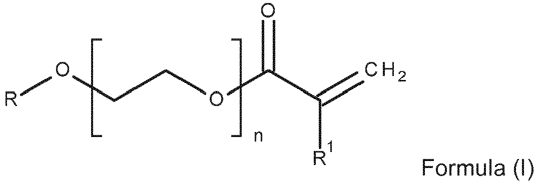
where
- R: is hydrogen or branched or unbranched C₁-C₂₀-alkyl, preferably methyl, ethyl, butyl or ethylhexyl,
- n: is 1 to 8, preferably 2 to 8, more preferably 2 to 5 and most preferably 2 and
- R¹: is hydrogen or CH₃-.

In the embodiment of the invention, at least some of the conjugated diene units have been hydrogenated. Preferably, the level of hydrogenation is 50% or more, more preferably 90% or more, most preferably 99% or more.

It should be noted at this point that the scope of the invention includes any and all possible combinations of the components, ranges of values and/or process parameters mentioned above and cited hereinafter, in general terms or within areas of preference.

The term **"nitrile-butadiene-PEG acrylate copolymer"** in the context of this invention concerns a copolymer containing at least one α,β-ethylenicallyunsaturated nitrile unit, at least one conjugated diene unit and at least one PEG acrylate unit derived from a PEG acrylate of the general formula (I).

The term **copolymer** encompasses polymers having more than one monomer unit. In one embodiment of the invention, the copolymer is derived exclusively, for example, from the three monomer types (a), (b) and (c) described, and is therefore a **terpolymer.** The term "copolymer" likewise encompasses, for example, additionally **quaterpolymers,** derived from the three monomer types (a), (b) and (c) described and a further monomer unit.

### α,β-Ethylenically unsaturated nitrile

The **α,β-ethylenically unsaturated nitrile** used, which forms the a,β-ethylenically **unsaturated nitrile units (a),** may be any known a,β-ethylenically unsaturated nitrile. Preference is given to (C₃-C₅)-α,β-ethylenically unsaturated nitriles such as acrylonitrile, α-haloacrylonitrile, for example α-chloroacrylonitrile and α-bromoacrylonitrile, α-alkylacrylonitrile, for example methacrylonitrile, ethacrylonitrile or mixtures of two or more α,β-ethylenically unsaturated nitriles. Particular preference is given to acrylonitrile, methacrylonitrile, ethacrylonitrile or mixtures thereof. Very particular preference is given to acrylonitrile.

The **amount of α,β-ethylenically unsaturated nitrile units (a)** is in the range from 10% to 35% by weight, preferably 15% to 30% by weight, more preferably from 18% to 28% by weight, based on the total amount of 100% by weight of all the monomer units.

### Conjugated diene

The **conjugated diene,** which forms the **conjugated diene unit (b),** may be of any type, especially conjugated C₄-C₁₂ dienes. Particular preference is given to 1,3-butadiene, isoprene, 2,3-dimethylbutadiene, 1,3-pentadiene (piperylene) or mixtures thereof. Especially preferred are 1,3-butadiene and isoprene or mixtures thereof. Very particular preference is given to 1,3-butadiene.

The **amount of conjugated diene** is in the range from 15% to 80% by weight, preferably 30% to 73% by weight and more preferably 36% to 69% by weight, based on the total amount of 100% by weight of all the monomer units.

### PEG acrylate

In addition to the α,β-ethylenically unsaturated nitrile units and the conjugated diene units, the hydrogenated nitrile-butadiene-PEG acrylate copolymer contains, as a third unit, at least one PEG **acrylate unit** derived from PEG acrylates of the general formula (I) 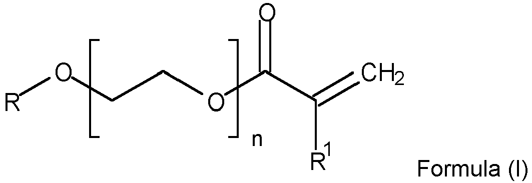 where
R is hydrogen or branched or unbranched C₁-C₂₀-alkyl, preferably methyl, ethyl, butyl or ethylhexyl,
n is 1 to 8, preferably 2 to 8, more preferably 2 to 5 and most preferably 2 and
R¹ is hydrogen or CH₃-.

The term "(meth)acrylate" in the context of this invention represents "acrylate" and "methacrylate". When the R¹ radical in the general formula (I) is CH₃-, the molecule is a methacrylate.

The term "polyethylene glycol" or the abbreviation "PEG" in the context of this invention represents both monoethylene glycol sections having one repeat ethylene glycol unit (PEG-1; n = 1) and polyethylene glycol sections having 2 to 8 repeat ethylene glycol units (PEG-2 to PEG-8; n = 2 to 8).

The term "PEG acrylate" is also abbreviated to PEG-X-(M)A where "X" represents the number of repeat ethylene glycol units, "MA" represents methacrylate and "A" represents acrylate.

Acrylate units derived from PEG acrylates of the general formula (I) are referred to in the context of this invention as "PEG acrylate unit".

Preferred PEG acrylate units are derived from the PEG acrylates of the following formulae no. 1 to no. 10, where n is 1, 2, 3, 4, 5, 6, 7 or 8, preferably 2, 3, 4, 5, 6, 7 or 8, more preferably 2, 3, 4, 5 or 5 and most preferably 2:

| | |
|---|---|
| Polyethylene glycol acrylate (Formula no. 1) | 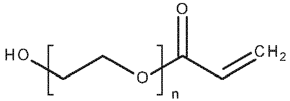 |
| Polyethylene glycol methacrylate (Formula no. 2) | 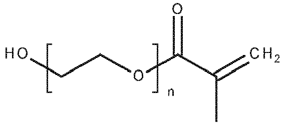 |
| Methoxy polyethylene glycol acrylate (Formula no. 3) | 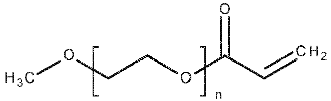 |
| Methoxy polyethylene glycol methacrylate (Formula no. 4) | 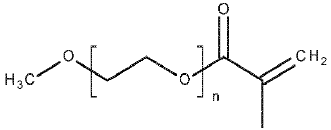 |
| Ethoxy polyethylene glycol acrylate (Formula no. 5) | 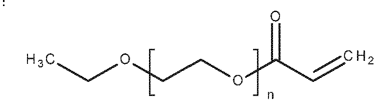 |
| Ethoxy polyethylene glycol methacrylate (Formula no. 6) | 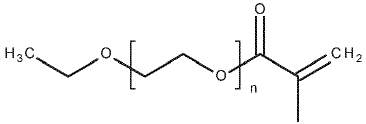 |
| Butoxy polyethylene glycol acrylate (Formula no. 7) | 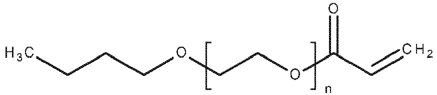 |
| Butoxy polyethylene glycol methacrylate (Formula no. 8) | 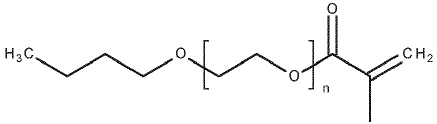 |
| Ethylhexyloxy polyethylene glycol acrylate (Formula no. 9) | 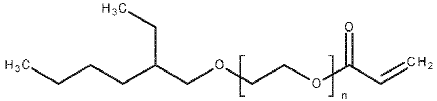 |
| Ethylhexyloxy polyethylene glycol methacrylate (Formula no. 10) | 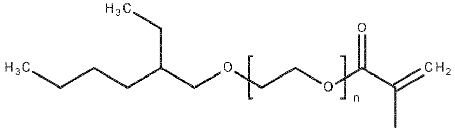 |

Other commonly used names for methoxy polyethylene glycol acrylate (formula no. 3) are, for example, poly(ethylene glycol) methyl ether acrylate, acryloyl-PEG, methoxy-PEG acrylate, methoxy poly(ethylene glycol) monoacrylate, poly(ethylene glycol) monomethyl ether monoacrylate or mPEG acrylate.

These PEG acrylates can be purchased commercially, for example from Arkema under the Sartomer^{®} trade name, from Evonik under the Visiomer^{®} trade name, or from Sigma Aldrich.

The **amount** of the PEG acrylate units in copolymers of the invention is in the range from 10% to 50% by weight, preferably 12% to 40% by weight and more preferably 13% to 30% by weight, based on the total amount of 100% by weight of all the monomer units.

In a preferred HNBR-PEG acrylate copolymer of the invention, the α,β-ethylenically unsaturated nitrile unit (a) is derived from acrylonitrile or methacrylonitrile, more preferably from **acrylonitrile,** the conjugated diene unit (b) from isoprene or 1,3-butadiene, more preferably from **1,3-butadiene,** and the PEG acrylate unit (c) is derived from PEG acrylate of the general formula (I) where n is 1 to 8, more preferably from PEG acrylate of the

### general formula (I) with n = 2.

In addition, the HNBR-PEG acrylate copolymer may contain one or more **further copolymerizable monomers** in an amount of 0.1% by weight to 10% by weight, preferably 0.1% by weight to 5% by weight, based on the total amount of 100% by weight of all monomer units. In that case, the amounts of the other monomer units are reduced in a suitable manner, such that the sum total is always 100% by weight. Further copolymerizable monomers which may be used are, for example,
- **aromatic vinyl monomers,** preferably styrene, α-methylstyrene and vinylpyridine,
- **fluorine-containing vinyl monomers,** preferably fluoroethyl vinyl ether, fluoropropyl vinyl ether, o-fluoromethylstyrene, vinyl pentafluorobenzoate, difluoroethylene and tetrafluoroethylene, or else
- **α-olefins,** preferably C₂-C₁₂ olefins, for example ethylene, 1-butene, 4-butene, 4-methyl-1-pentene, 1-hexene or 1-octene,
- **non-conjugated dienes,** preferably C₄-C₁₂ dienes such as 1,4-pentadiene, 1,4-hexadiene, 4-cyanocyclohexene, 4-vinylcyclohexene, vinylnorbornene, dicyclopentadiene or else
- **alkynes** such as 1- or 2-butyne,
- **α,β-ethylenically unsaturated monocarboxylic acids,** preferably acrylic acid, methacrylic acid, crotonic acid or cinnamic acid,
- **α,β-ethylenically unsaturated monocarboxylic esters,** preferably butyl acrylate,
- **α,β-ethylenically unsaturated dicarboxylic acids,** preferably maleic acid, fumaric acid, citraconic acid, itaconic acid,
- **α,β-ethylenically unsaturated dicarboxylic acid monoesters,** for example
   o alkyl monoesters, especially C₄-C₁₈-alkyl monoesters, preferably n-butyl, tert-butyl, n-pentyl or n-hexyl monoesters, more preferably mono-n-butyl maleate, mono-n-butyl fumarate, mono-n-butyl citraconate, mono-n-butyl itaconate,
   o alkoxyalkyl monoesters, especially C₄-C₁₈-alkoxyalkyl monoesters, preferably C₄-C₁₂-alkoxyalkyl monoesters,
   o hydroxyalkyl monoesters, especially C₄-C₁₈-hydroxyalkyl monoesters, preferably C₄-C₁₂-hydroxyalkyl monoesters,
   o cycloalkyl monoesters, especially C₅-C₁₈-cycloalkyl monoesters, preferably C₆-C₁₂-cycloalkyl monoesters, more preferably monocyclopentyl maleate, monocyclohexyl maleate, monocycloheptyl maleate, monocyclopentyl fumarate, monocyclohexyl fumarate, monocycloheptyl fumarate, monocyclopentyl citraconate, monocyclohexyl citraconate, monocycloheptyl citraconate, monocyclopentyl itaconate, monocyclohexyl itaconate and monocycloheptyl itaconate,
   o alkylcycloalkyl monoesters, especially C₆-C₁₂-alkylcycloalkyl monoesters, preferably C₇-C₁₀-alkylcycloalkyl monoesters, more preferably monomethylcyclopentyl maleate and monoethylcyclohexyl maleate, monomethylcyclopentyl fumarate and monoethylcyclohexyl fumarate, monomethylcyclopentyl citraconate and monoethylcyclohexyl citraconate; monomethylcyclopentyl itaconate and monoethylcyclohexyl itaconate,
   o aryl monoesters, especially C₆-C₁₄-aryl monoesters, preferably monoaryl maleate, monoaryl fumarate, monoaryl citraconate or monoaryl itaconate, more preferably monophenyl maleate or monobenzyl maleate, monophenyl fumarate or monobenzyl fumarate, monophenyl citraconate or monobenzyl citraconate, monophenyl itaconate or monobenzyl itaconate or mixtures thereof,
   o unsaturated polyalkyl polycarboxylates, for example dimethyl maleate, dimethyl fumarate, dimethyl itaconate or diethyl itaconate; or
   o α,β-ethylenicallyunsaturated carboxylic esters containing amino groups, for example dimethylaminomethyl acrylate or diethylaminoethyl acrylate
- **copolymerizable antioxidants,** for example N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline or
- **crosslinkable monomers,** for example divinyl components, for example divinylbenzene; di(meth)acrylic esters, for example ethylene glycol di(meth)acrylate, diethylene glycol di(meth)acrylate, butanediol di(meth)acrylate or polyethylene glycol di(meth)acrylate, or tri(meth)acrylic esters, for example trimethylolpropane tri(meth)acrylate; self-crosslinkable monomers, for example N-methylol(meth)acrylamide or N,N'-dimethylol(meth)acrylamide.

In a further preferred embodiment, the HNBR-PEG acrylate copolymer is a hydrogenated nitrile-diene-PEG acrylate copolymer containing
10% to 35% by weight of α,β-ethylenically unsaturated nitrile units,
15% to 80% by weight of conjugated diene units,
10% to 50% by weight of PEG acrylate units derived from the general formula (I) and
0% to 20% by weight of at least one α,β-ethylenicallyunsaturated carboxylic ester unit.

Some further copolymerizable monomers affect the physical properties of the hydrogenated nitrile-butadiene-PEG acrylate copolymer of the invention.

Copolymerized monomer units having at least one free carboxylic acid group, for example acrylic acid, methacrylic acid, ethylenically unsaturated dicarboxylic monoesters or ethylenically unsaturated dicarboxylic acids, generally lead to a deterioration in the ageing properties. As a result of free acid groups in the polymer, a drop in elongation after ageing at elevated temperatures was detectable. At the same time, a rise in the glass transition temperature was observable, which has adverse effects on the demand for excellent low-temperature flexibility which has been made here. The effect on the ageing properties depends upon factors including the length of the copolymerized PEG acrylate unit, with particular deterioration in the ageing properties especially in the case of a copolymerized PEG-1 unit, i.e. in the case of PEG acrylate units derived from (alkoxy) monoethylene glycol (meth)acrylate.

In one embodiment, the hydrogenated nitrile-butadiene-PEG acrylate copolymer of the invention contains, aside from the α,β-ethylenicallyunsaturated nitrile unit (a), the conjugated diene unit (b) and the PEG acrylate unit (c) derived from a PEG acrylate of the general formula (I) where n is 1, no monomer units having a free carboxylic acid group.

Even more preferably, the hydrogenated nitrile-butadiene-PEG acrylate copolymer contains, aside from the α,β-ethylenicallyunsaturated nitrile unit (a), the conjugated diene unit (b) and the PEG acrylate unit (c) derived from a PEG acrylate of the general formula (I), no monomer units having a free carboxylic acid group.

Most preferably, the hydrogenated nitrile-butadiene-PEG acrylate copolymer contains, aside from the α,β-ethylenicallyunsaturated nitrile unit (a), the conjugated diene unit (b) and the PEG acrylate unit (c) derived from a PEG acrylate of the general formula (I), no further monomer units. This means that this embodiment consists solely of α,β-ethylenically unsaturated nitrile units (a), conjugated diene units (b) and PEG acrylate units (c) derived from a PEG acrylate of the general formula (I).

In a particularly preferred embodiment, the PEG acrylate unit (c) is butyldiglycol methacrylate. Thus, component (i), in a particularly preferred embodiment, as well as units derived from acrylonitrile and units derived from 1,3-butadiene, has further units derived from butyldiglycol methacrylate.

In addition, component (i) more preferably includes 18% to 33% by weight of acrylonitrile monomers units, 36% to 69% by weight of 1,3-butadiene monomer units and 13% to 30% by weight of butyldiglycol methacrylate monomer units.

Most preferably, component (i) includes 19% to 26% by weight of acrylonitrile monomer units, 47% to 59% by weight of 1,3-butadiene monomer units and 22% to 28% by weight of butyldiglycol methacrylate monomer units.

The hydrogenated nitrile-butadiene-PEG acrylate copolymer of the invention typically has a number-average **molecular weight (Mn)** of 10 000 g/mol to 2 000 000 g/mol, preferably 50 000 g/mol to 1 000 000 g/mol, more preferably 100 000 g/mol to 500 000 g/mol and most preferably 150 000 g/mol to 300 000 g/mol.

The hydrogenated nitrile-butadiene-PEG acrylate copolymer of the invention typically has a **polydispersity index** (PDI = M_{w}/Mₙ where M_{w} is the weight-average molecular weight) of 1.5 to 6, preferably 2 to 5 and more preferably 2.5 to 4.

The hydrogenated nitrile-butadiene-PEG acrylate copolymer of the invention typically has a **Mooney viscosity** (ML1+4@100°C) of 10 to 150, preferably of 20 to 120 and more preferably of 25 to 100.

Processes for preparing HNBR-PEG acrylate copolymer are known, for example, from EP-A-3196240**.**

### Component (ii) - peroxide compound

At least one peroxide compound as crosslinking agent is used as component (ii). Suitable peroxide compounds (ii) are, for example, the following peroxide compounds: bis(2,4-dichlorobenzoyl) peroxide, dibenzoyl peroxide, bis(4-chlorobenzoyl) peroxide, 1,1-bis(tertbutylperoxy)-3,3,5-trimethylcyclohexane, tert-butyl perbenzoate, 2,2-bis(tertbutylperoxy)butene, 4,4-di-tert-butyl peroxynonylvalerate, dicumyl peroxide, 2,5-dimethyl-2,5-di(tert-butylperoxy)hexane, tert-butyl cumyl peroxide, 1,3-bis(tertbutylperoxyisopropyl)benzene, di-tert-butyl peroxide, 2,5-dimethyl-2,5-di(tertbutylperoxy)hexyne, tert-butyl hydroperoxide, hydrogen peroxide, methyl ethyl ketone peroxide, lauroyl peroxide, decanoyl peroxide, 3,5,5-trimethylhexanoyl peroxide, di(2-ethylhexyl) peroxydicarbonate, poly(tert-butyl peroxycarbonate), ethyl 3,3-di(tertbutylperoxy)butyrate, ethyl 3,3-di(tert-amylperoxy)butyrate, n-butyl 4,4-di(tertbutylperoxy)valerate, 2,2-di(tert-butylperoxy)butane, 1,1-di(tert-butylperoxy)cyclohexane, 3,3,5-trimethylcyclohexane, 1,1-di(tert-amylperoxy)cyclohexane, tert-butyl peroxybenzoate, tert-butyl peroxyacetate, tert-butyl peroxy-3,5,5-trimethylhexanoate, tert-butyl peroxyisobutyrate, tert-butyl peroxy-2-ethylhexanoate, tert-butyl peroxypivalate, tert-amyl peroxypivalate, tert-butyl peroxyneodecanoate, cumyl peroxyneodecanoate, 3-hydroxy-1,1-dimethylbutyl peroxyneodecanoate, tert-butyl peroxybenzoate, tert-butyl peroxyacetate, tert-amyl peroxy-3,5,5-trimethylhexanoate, tert-butyl peroxyisobutyrate, tert-butyl peroxy-2-ethylhexanoate, cumyl peroxyneodecanoate, 3-hydroxy-1,1-dimethylbutyl peroxyneodecanoate, 2,5-dimethyl-2,5-di(tert-butylperoxy)hexyne 3-di-tert-amyl peroxide, 2,5-dimethyl-2,5-di(tert-butylperoxy)hexane, tert-amyl hydroperoxide, cumene hydroperoxide, 2,5-dimethyl-2,5-di(hydroperoxy)hexane, diisopropylbenzene monohydroperoxide and potassium peroxodisulfate.

The at least one peroxide compound in the vulcanisable composition according to the invention is preferably an organic peroxide, more preferably dicumyl peroxide, tert-butyl cumyl peroxide, bis(tert-butylperoxyisopropyl)benzene, di-tert-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, tert-butyl perbenzoate, butyl 4,4-di(tert-butylperoxy)valerate and/or 1,1-bis(tert-butylperoxy)-3,3,5-trimethylcyclohexane, and most preferably di(tert-butylperoxyisopropyl)benzene.

Component (ii) is present in the vulcanisable compositions according to the invention preferably in an **amount** of 1 to 20 parts by weight, more preferably in an amount of 2 to 10 parts by weight, based on 100 parts by weight of component (i).

In addition, the vulcanisable composition may comprise further **rubber additives.** Standard rubber additives include, for example: polymers not covered by the inventive definition of component (i), fillers, filler-activators, processing aids, oils, especially processing oils, mineral oils or extender oils, plasticizers, accelerators, multifunctional crosslinkers, ageing stabilizers, reversion stabilizers, light stabilizers, antiozonants, antioxidants, mould release agents, retarders, tackifiers, blowing agents, stabilizers, dyes, pigments, waxes, resins, extenders, fillers, for example barium sulfate, titanium dioxide, zinc oxide, calcium oxide, calcium carbonate, magnesium oxide, aluminium oxide, iron oxide, aluminium hydroxide, magnesium hydroxide, aluminosilicates, diatomaceous earth, talc, kaolins, bentonites, carbon nanotubes, graphene, Teflon (the latter preferably in powder form), silicates, carbon blacks, silicas, pyrogenic silica, silica, silanized silica, natural products, for example alumina, kaolins, wollastonite, organic acids, vulcanisation retarders, metal oxides, fibres comprising organic and inorganic fibres made of glass cords, fabric, fibres made of aliphatic and aromatic polyamides (Nylon^{®}, Aramid^{®}), polyesters and natural fibre products, and also fibre pulps, vulcanisation activators, additional polymerizable monomers, dimers, trimers or oligomers, salts of unsaturated carboxylic acids, for example zinc diacrylate (ZDA), zinc methacrylates (ZMA) and zinc dimethacrylate (ZDMA), liquid acrylates or other additives known in the rubber industry (Ullmann's Encyclopedia of Industrial Chemistry, VCH Verlagsgesellschaft mbH, D-69451 Weinheim, 1993, vol A 23 "Chemicals and Additives", p. 366-417).

Useful **filler-activators** include organic silanes in particular, for example vinyltrimethyloxysilane, vinyldimethoxymethylsilane, vinyltriethoxysilane, vinyltris(2-methoxyethoxy)silane, N-cyclohexyl-3-aminopropyltrimethoxysilane, 3-aminopropyltrimethoxysilane, methyltrimethoxysilane, methyltriethoxysilane, dimethyldimethoxysilane, dimethyldiethoxysilane, trimethylethoxysilane, isooctyltrimethoxysilane, isooctyltriethoxysilane, hexadecyltrimethoxysilane or (octadecyl)methyldimethoxysilane. Further filler-activators are, for example, interfaceactive substances such as triethanolamine or ethylene glycols with molecular weights of 74 to 10 000 g/mol. The amount of filler-activators is typically 0 to 10 parts by weight, based on 100 parts by weight of the rubbers (i).

In an alternative embodiment, the vulcanisable composition does not include any silane-coated wollastonite.

Useful **ageing stabilizers** are especially those which scavenge a minimum number of radicals in the peroxidic vulcanisation. These are especially oligomerized 2,2,4-trimethyl-1,2-dihydroquinoline (TMQ), styrenized diphenylamine (DDA), octylated diphenylamine (OCD), cumylated diphenylamine (CDPA), 4- and 5-methylmercaptobenzimidazole (MB2) or zinc salt of 4- and 5-methylmercaptobenzimidazole (ZMB2). In addition, it is also possible to use the known phenolic ageing stabilizers, such as sterically hindered phenols, or ageing stabilizers based on phenylenediamine. It is also possible to use combinations of the ageing stabilizers mentioned, preferably CDPA in combination with ZMB2 or MB2, more preferably CDPA with MB2.

The ageing stabilizers are typically used in amounts of 0.1 to 5 parts by weight, preferably of 0.3 to 3 parts by weight, based on 100 parts by weight of the rubbers (i).

Examples of useful **mould release agents** include: saturated or partly unsaturated fatty acids and oleic acids or derivatives thereof (in the form of fatty acid esters, fatty acid salts, fatty alcohols or fatty acid amides), and also products applicable to the mould surface, for example products based on low molecular weight silicone compounds, products based on fluoropolymers and products based on phenolic resins.

The mould release agents are used as blend component in amounts of 0.2 to 10 parts by weight, preferably 0.5 to 5 parts by weight, based on 100 parts by weight of the rubbers (i).

Reinforcement of the vulcanisates with glass strengthening elements according to the teaching of US-A-4,826,721 is also possible, as is reinforcement with aromatic polyamides (aramid).

The invention further provides a **process for producing the aforementioned vulcanisable compositions according to the invention,** by mixing all components (i) and (ii) and optionally further components. This can be effected using apparatuses and mixing units known to those skilled in the art.

The sequence in which the components are mixed with one another is not of fundamental importance, but is matched in each case to the mixing units available and the temperature regime.

The composition comprising components (i) and (ii) can, according to temperature, be mixed using the typical mixing systems that are in common use in the rubber industry. It is possible to use batchwise mixing units in the form of mixing rolls or internal mixers and continuous mixing units such as mixing extruders.

It has been found to be particularly useful to conduct the mixing of components (i) and (ii) at a defined mixer temperature in the range from about 30 to 40°C, since sufficiently high shear forces can be applied here with the abovementioned mixing units that are in common use in the rubber processing industry to achieve good mixing.

Preferably, the HNBR-PEG acrylate copolymer (i) according to the invention is initially charged and masticated, and then all further components apart from the vulcanisation chemicals (peroxide compound and coagent) are added. After an appropriate mixing time, the mixture is discharged. The peroxide compound and the coagent are mixed in in a second step on a roll. The speed of the roll is controlled here such that stable skins are obtained.

In practice, after the components according to the invention have been mixed, the vulcanisable compositions are obtained, for example, in the form of what are called "skins", feed strips or feed slabs, or else in the form of pellets or granules. These can subsequently be pressed in moulds or injection-moulded and are crosslinked under suitable conditions according to the free-radical donors used.

The invention further provides for the **production of vulcanisates** by subjecting the aforementioned vulcanisable compositions to an input of energy, especially a thermal treatment.

The input of energy can be effected, for example, in the form of thermal energy.

The production of the vulcanised products by means of thermal treatment is conducted by subjecting the vulcanisable compositions according to the invention to a temperature in the range from preferably 120 to 200°C, more preferably from 140 to 180°C, in a customary manner in suitable moulds. The vulcanisation can be brought about with the aid of any method, such as compression vulcanisation, steam vulcanisation and the like.

In the course of crosslinking of the vulcanisable composition according to the invention, the peroxide compounds (ii) lead to free-radical crosslinking between and with the rubbers (i) used.

### Coolant

The person skilled in the art understands **coolant** to mean a liquid substance or substance mixture which is used to transport heat away. The coolant is capable of transporting the enthalpy along the temperature gradient to a site at lower temperature in a cooling cycle. Cooling liquids can cool the material to be cooled directly or via a heat exchanger.

In the context of this invention, coolants are compositions comprising water, a freezing point depressant, preferably alkylglycol or salts, more preferably ethylene glycol or propylene glycol, and a corrosion inhibitor, preferably neutralized organic acids.

The invention also further provides the **crosslinked rubbers, i.e. vulcanisates,** obtainable by crosslinking the aforementioned vulcanisable compositions containing HNBR-PEG acrylate copolymer (i) and peroxide compound (ii), and for the **use of these vulcanisates for production of a component part** in contact with coolant.

The invention also further provides **component parts** comprising a vulcanisate in contact with a coolant, produced from a vulcanisable composition, characterized in that the vulcanisable composition comprises
(i) at least one **HNBR-PEG acrylate copolymer** and
(ii) at least one **peroxide compound.**

Preferably, these component parts are gaskets, cooler gaskets, hoses, cooler hoses, motor vehicle cooling water hoses, heating hoses and cooler housings. The vulcanisates obtained by the vulcanising of the vulcanisable composition can be processed by a customary method to give a cooler hose, a heating hose, a cooler housing, a cooler gasket or the like, and these products are particularly excellent products having the above-described properties. More particularly, vulcanisates of this kind have improved ageing stability.

The invention further provides **cooling units** having at least one vulcanisate produced from a vulcanisable composition comprising the aforementioned components (i) and (ii) and coolant. Examples of such cooling units are cooling devices for motor vehicles.

### Examples

### Storage tests (raw polymer):

8 grams of raw polymer are stored in 200 ml of medium at 150°C for 7 days.

### Determination of Tg (DSC):

The **glass transition temperature** was obtained with the aid of a DSC measurement in accordance with ASTM E 1356-03 or in accordance with DIN 11357-2. For this purpose, between 10 mg and 15 mg of the sample were weighed into an aluminium tray and sealed. The tray was heated twice from -150°C to 150°C at a heating rate of 10 K/min in a DSC instrument from TA Instruments. The glass transition temperature was determined from the second heating curve by the standard mean value method.

### Determination of the gel content in MEK:

The gel content is the proportion of the polymer insoluble in methyl ethyl ketone (MEK) at 23°C. To determine the gel content, 250 mg of the polymer are dissolved in 25 ml of MEK by shaking at 23°C for 24 hours. After centrifugation at 20 000 rpm, the insoluble fraction is removed and dried. The gel content is calculated from the quotient of the dried residue and the starting weight and is reported in per cent by weight.

The amounts in part by weight stated in the examples are based on 100 parts by weight of the rubber (i).

### MDR

The MDR (moving die rheometer) vulcanisation profile and analytical data associated therewith were measured in a Monsanto MDR 2000 rheometer in accordance with ASTM D5289-95.

### Determination of hardness (H):

Shore A hardness was measured in accordance with ASTM-D2240-81.

### Determination of tensile strength (TS) and elongation at break (EB):

The tensile tests for determining the strain as a function of deformation were carried out in accordance with DIN 53504 or ASTM D412-80.

### Determination of increase in volume (ΔV; swelling) and mass (Δmass):

The measurement is effected at room temperature directly after the storage.

### Determination of solubility in MCB (5%):

Solubility in monochlorobenzene (MCB) is determined by dissolving 5 g of polymer in 10 ml of MCB by shaking at 23°C for 24 hours. The distinction between soluble and insoluble is made by visual monitoring.

### Determination of butanol content:

The butanol content in the coolant was determined by use of headspace gas chromatography. The standard addition method was used for identification of the butanol peak and quantification.

### Components used:

| | |
|---|---|
| Therban^{®}3407 | hydrogenated nitrile rubber, ACN content: 34% by weight, Mooney viscosity ML 1+4 @100°C: 70 MU, residual double bond content: max. 0.9%, available from ARLANXEO Deutschland GmbH. |
| Therban^{®}LT 1707 VP | butyl acrylate-containing, hydrogenated nitrile rubber, ACN content: 17% by weight, Mooney viscosity ML 1+4 @100°C: 74 MU, residual double bond content: |
| | max. 0.9%, available from ARLANXEO Deutschland GmbH. |
| HNBR-PEG acrylate 1 | PEG acrylate-containing, hydrogenated nitrile rubber (termonomer = methoxyethyl acrylate), ACN content: 20% by weight, Mooney viscosity ML 1+4 @100°C: 28 MU, residual double bond content: max. 0.9% |
| HNBR-PEG acrylate 2 | PEG acrylate-containing, hydrogenated nitrile rubber (termonomer = butyldiglycol methacrylate), ACN content: 31% by weight, Mooney viscosity ML 1+4 @100°C: 75 MU, residual double bond content: max. 0.9% |
| HNBR-PEG acrylate 3 | PEG acrylate-containing, hydrogenated nitrile rubber (termonomer = butyldiglycol methacrylate), ACN content: 20% by weight, Mooney viscosity ML 1+4 @100°C: 26 MU, residual double bond content: max. 0.9% |
| HNBR-PEG acrylate 4 | PEG acrylate-containing, hydrogenated nitrile rubber (termonomer = butyldiglycol methacrylate), ACN content: 25% by weight, Mooney viscosity ML 1+4 @100°C: 26 MU, residual double bond content: max. 0.9% |
| Luvomaxx^{®} MT N-990 | carbon black, available from Lehmann and Voss |
| Luvomaxx^{®} CDPA | 4,4'-bis(1,1-dimethylbenzyl)diphenylamine, available from Lehmann and Voss |
| Tremin^{®} 283-600 VST | vinylsilane-coated wollastonite, available from Quarzwerke |
| Perkadox^{®} 14-40 B-PD | di(tert-butylperoxyisopropyl)benzene 40% supported on silica; available from Akzo Nobel Polymer Chemicals BV |
| Rhenofit^{®} TRIM/S | 70% trimethylolpropane trimethacrylate on 30% silica; coagent; available from LANXESS Deutschland GmbH |
| Vulkanox^{®} MB2 | 4- and 5-methyl-2-mercaptobenzimidazole; available from Lanxess Deutschland GmbH |
| MgO | magnesium oxide, available from CP Hall |
| TAIC 70% | KETTLITZ-TAIC 70; coagent; available from Kettlitz-Chemie GmbH & Co. KG |
| Glysantin^{®} G64 Ready-Mix | G64 coolant additive available from BASF; for the storage tests, 50 parts by volume of deionized water and 50 parts by volume of G64 coolant additive were mixed |

### Example 1:

### Process for preparing the HNBR-PEG acrylates 1-4

### a) Polymerization

The nitrile-butadiene-PEG acrylate copolymers (PEG-NBRs) used in the series of examples which follow were prepared according to the base formulation specified in Table 1, wherein all feedstocks (except for the SDPA/Naugawhite^{®} stabilizer) are reported in % by weight based on 100% by weight of the monomer mixture. Table 1 also gives the particular polymerization conditions (temperature, conversion and time).

**Table 1: Preparation of the PEG-NBRs**

| **PEG-NBR** | **1** | **2** | **3** | **4** |
|---|---|---|---|---|
| Acrylonitrile (total/increment**) | 19/3 | 37.5/9 | 18/9 | 27/9 |
| 1,3-Butadiene | 42 | 44.5 | 41 | 46 |
| Methoxyethyl acrylate (MEA) | 39 | | | |
| Butyldiglycol methacrylate (BDGMA) | | 18 | 41 | 27 |
| Total amount of water | 190 | 190 | 190 | 190 |
| Disponil^{®} SDS G | 2.4 | 2.4 | 2.4 | 2.4 |
| Na salt of the disproportionated resin acid | 0.5 | 0.5 | 0.5 | 0.5 |
| Na₂CO₃ | 0.12 | 0.12 | 0.12 | 0.12 |
| Sodium hydroxide solution | 0.005 | 0.005 | 0.005 | 0.005 |
| pH | 10.7±0.5 | 10.7±0.5 | 10.7±0.5 | 9.4±0.5 |
| t-DDM | 0.520 | 0.450 | 0.45 | 0.3 |
| Glidox^{®} 500 | 0.02 | 0.02 | 0.02 | 0.02 |
| Premix solution FeSO₄ | 0.022 | 0.020 | 0.024 | 0.024 |
| Diethylhydroxylamine | 0.2 | 0.2 | 0.2 | 0.2 |
| SDPA/Naugawhite^{®} | 0.5/0.15 | 0.5/0.15 | 0.5/0.15 | 0.5/0.15 |
| Polymerization temperature [°C] | 12±0.5 | 12±0.5 | 12±0.5 | 12±0.5 |
| Polymerization conversion [%] | 75.0 | 74.3 | 75.3 | 78.8 |
| Polymerization time [h] | 7.00 | 6.13 | 7.5 | 7.7 |

| | | | | |
|---|---|---|---|---|
| ** The increment was added at a monomer conversion of 33% | | | | |

The PEG-NBRs were prepared batchwise in a 5 I autoclave with stirrer system. In each of the autoclave batches, 1.30 kg of the monomer mixture and a total amount of water of 2.51 kg were used, as was EDTA in an equimolar amount based on the Fe(II). 2.25 kg of this amount of water were initially charged with the emulsifier in the autoclave and purged with a nitrogen stream. Thereafter, the monomers and the amount of the t-DDM molecular weight regulator specified in Table 1 were added and the reactor was closed. Once the reactor contents had been thermostatted, the polymerizations were initiated by addition of the premix solutions and of pinane hydroperoxide (Glidox^{®} 500).

The progression of the polymerization was monitored by gravimetric conversion determinations. Upon attainment of the conversions reported in Table 1 the polymerization was terminated by adding an aqueous solution of diethylhydroxylamine. Unconverted monomers and other volatile constituents were removed by means of steam distillation.

Prior to the coagulation of each NBR latex, an emulsion of 50% SDPA and 15% Naugawhite^{®} (0.5% by weight of SDPA/0.15% by weight of Naugawhite^{®} based on NBR solids) was added to each. This was followed by coagulation with CaCl₂, washing and drying of the crumbs obtained.

### b) Hydrogenation

The hydrogenations which follow were performed using the above-synthesized nitrile-butadiene-PEG acrylate copolymers (PEG-NBR 1 to 4).

Dry monochlorobenzene (MCB), Wilkinson catalyst and triphenylphosphine were purchased from VWR and used as obtained. The results of the hydrogenation experiments are compiled in Table 2.

Hydrogenations 1 - 4 were performed in a 10 I high-pressure reactor under the following conditions:

| | |
|---|---|
| Solvent: | monochlorobenzene |
| Solids concentration: | 12-13% by weight of PEG-NBR terpolymer in MCB (518 g) |
| Reactor temperature: | 137-140°C |
| Reaction time: | up to 4 hours |
| Catalyst & loading: | Wilkinson catalyst: 0.337 g (0.065 phr); |
| | Co-catalyst: triphenylphosphine: 5.18 g (1.0 phr) |
| Hydrogen pressure (p H₂): | 8.4 MPa |
| Stirrer speed: | 600 rpm |

The PEG-NBR-containing polymer solution is degassed three times with H₂ (23°C, 2 MPa) with vigorous stirring. The temperature of the reactor was raised to 100°C and the H₂ pressure to 6 MPa. 123.9 g of a chlorobenzene solution consisting of Wilkinson catalyst (0.337 g) and triphenylphosphine (5.18 g) were added and the pressure was raised to 8.4 MPa, while the reactor temperature was adjusted to 137-140°C. Both parameters were kept constant during the reaction. The course of the reaction was monitored by means of measurement of the residual double bond content (RDB) of the nitrile-butadiene-PEG acrylate copolymer by means of IR spectroscopy. The reaction was ended after not more than 4 hours and/or attainment of an RDB content of < 1% by releasing the hydrogen pressure.

The hydrogenated PEG-HNBR thus formed was isolated from the solution by means of steam coagulation. For this purpose, the chlorobenzene solution was diluted to a polymer content of 7% by weight and metered continuously into a stirred, water-filled glass reactor preheated to 100°C. At the same time, 0.5 bar steam was used for introduction into the coagulation water. The polymer crumbs thus precipitated were roughly dewatered and then dried to constant weight at 55°C under reduced pressure.

**Table 2: Properties of the hydrogenated polymers**

| | **Therban^{®} LT 1707 VP*** | **Therban^{®} 3407*** | **HNBR-PEG acrylate 1** | **HNBR-PEG acrylate 2** | **HNBR-PEG acrylate 3** | **HNBR-PEG acrylate 4** |
|---|---|---|---|---|---|---|
| **ACN** | 17 | 34 | 20 | 31 | 20 | 25 |
| **BD** | 50 | 66 | 54 | 55 | 54 | 51 |
| **BA** | 33 | - | - | - | - | - |
| **MEA** | - | - | 26 | - | - | - |
| **BDGMA** | - | - | - | 14 | 26 | 24 |
| **Tg [°C]** | -40 | -24 | -35 | -29 | -40 | -36 |

| | | | | | | |
|---|---|---|---|---|---|---|
| * Comparative experiment; monomer figures in % by weight | | | | | | |

**Table 3: Storage of the raw polymers (8 g) at 150°C for 7 days in 200 ml of water/G64 medium (1:1)**

| | **Therban^{®} LT 1707 VP*** | | **Therban^{®} 3407*** | | **HNBR-PEG acrylate 1** | | **HNBR-PEG acrylate 2** | | **HNBR-PEG acrylate 3** | |
|---|---|---|---|---|---|---|---|---|---|---|
| **Storaqe time [d]** | 0 | 7 | 0 | 7 | 0 | 7 | 0 | 7 | 0 | 7 |
| **Solubility** | yes | no | yes | yes | yes | yes | yes | yes | yes | yes |
| **Gel [%]** | 1.2 | 5.7 | 0.5 | 0.6 | 1.3 | 1.4 | 1.4 | 1.8 | 0.9 | 0.6 |
| **Butanol [mg/kg]** | - | 126 | - | < d.l. | - | < d.l. | - | < d.l. | - | < d.l. |

| | | | | | | | | | | |
|---|---|---|---|---|---|---|---|---|---|---|
| < d.l. = below the limit of detection of 5 mg/kg | | | | | | | | | | |

**Table 4: Composition of the vulcanisable compositions (figures in parts by weight)**

| | **V1*** | **V2*** | **V3** | **V4** | **V5** |
|---|---|---|---|---|---|
| **Therban^{®} 3407** | 100 | | | | |
| **Therban^{®} LT 1707 VP** | | 100 | | | |
| **HNBR-PEG acrylate 2** | | | 100 | | |
| **HNBR-PEG acrylate 3** | | | | 100 | |
| **HNBR-PEG acrylate 4** | | | | | 100 |
| **Luvomaxx^{®} MT N-990** | 50 | 50 | 50 | 50 | 50 |
| **Luvomaxx^{®} CDPA** | 1.5 | 1.5 | 1.5 | 1.5 | 1.5 |
| **Tremin^{®} 283-600 VST** | 35 | 35 | 35 | 35 | 35 |
| **MgO** | 3 | 3 | 3 | 3 | 3 |
| **MB2** | 0.3 | 0.3 | 0.3 | 0.3 | 0.3 |
| **Perkadox^{®} 14-40 B-PD** | 8.5 | 9 | 9 | 9 | 9 |
| **Rhenofit^{®} TRIM/S** | 1.5 | 1.5 | 1.5 | 1.5 | 1.5 |

**Table 5: Vulcanisation characteristics of the vulcanisable compositions (MDR 180°C 30 min S16)**

| | | **V1*** | **V2*** | **V3** | **V4** | **V5** |
|---|---|---|---|---|---|---|
| **S' min** | dNm | 1.67 | 1.56 | 1.58 | 0.78 | 2.23 |
| **S' max** | dNm | 30.91 | 16.85 | 19 | 16.49 | 20.22 |
| **S' final** | dNm | 30.51 | 16.69 | 18.56 | 15.96 | 19.51 |
| **Delta S'** | dNm | 29.24 | 15.29 | 17.42 | 15.71 | 17.99 |
| **TS 1** | s | 30 | 40 | 34 | 34 | 29 |
| **TS 2** | s | 36 | 49 | 41 | 41 | 35 |
| **t 10** | s | 40 | 45 | 39 | 38 | 34 |
| **t 25** | s | 57 | 66 | 56 | 52 | 46 |
| **t 30** | s | 63 | 74 | 62 | 58 | 50 |
| **t 50** | s | 96 | 113 | 95 | 90 | 74 |
| **t 70** | s | 150 | 176 | 149 | 142 | 119 |
| **t 80** | s | 195 | 228 | 193 | 182 | 156 |
| **t 90** | s | 273 | 317 | 267 | 250 | 218 |
| **t 95** | s | 352 | 407 | 340 | 316 | 278 |
| **S'@t 90** | dNm | 27.99 | 15.32 | 17.26 | 14.92 | 18.42 |
| **t@S'max** | s | 799 | 924 | 706 | 631 | 563 |
| **tan D of end value** | | 0.04 | 0.05 | 0.05 | 0.04 | 0.03 |

| | | | | | | |
|---|---|---|---|---|---|---|
| S' min is the minimum torque of the crosslinking isotherm S' max is the maximum torque of the crosslinking isotherm Delta S' difference of S'max and S'min t50: time at which 50% of the final conversion has been attained t90: time at which 90% of the final conversion has been attained t95: time at which 95% of the final conversion has been attained | | | | | | |

**Table 6: Properties of the vulcanised compositions**

| | | **V1*** | **V2*** | **V3** | **V4** | **V5** |
|---|---|---|---|---|---|---|
| **Hardness** | **ShA** | 69 | 61 | 64 | 60 | 63 |
| **M10** | **MPa** | 0.8 | 0.6 | 0.7 | 0.6 | 0.6 |
| **M25** | **MPa** | 1.5 | 1.1 | 1.3 | 1.1 | 1.2 |
| **M50** | **MPa** | 3 | 2.1 | 2.2 | 2 | 2.3 |
| **M100** | **MPa** | 7.6 | 4.6 | 5.2 | 4.7 | 5.6 |
| **M300** | **MPa** | -- | -- | 13 | -- | -- |
| **EB** | **%** | 271 | 278 | 350 | 277 | 260 |
| **TS** | **MPa** | 16.4 | 12 | 13.7 | 10.7 | 11.9 |

**Table 7: Properties of the vulcanised compositions after storage (21 days; 150°C) in G64 Ready-Mix (50/50 mixture with water) - ratio of vulcanisate to coolant = 1:80**

| | | **V*** | **V2*** | **V3** | **V4** | **V5** |
|---|---|---|---|---|---|---|
| **Δ mass** | **%** | 2.9 | 2.2 | 3.3 | 1.9 | 2.3 |
| **Δ volume** | **%** | 4.1 | 3.5 | 2.8 | 0.8 | 1.5 |
| **Hardness** | **ShA** | 71 | 78 | 67 | 66 | 70 |
| **Δ hardness** | **ShA** | 2 | 17 | 4 | 6 | 7 |
| **M10** | **MPa** | 1 | 1.9 | 0.8 | 0.8 | 0.9 |
| M**2**5 | **MPa** | 1.8 | 3.6 | 1.5 | 1.4 | 1.7 |
| **M50** | **MPa** | 2.9 | 6 | 2.3 | 2.2 | 2.8 |
| **M100** | **MPa** | 5.3 | 9.1 | 4.5 | 4 | 5.5 |
| **M300** | **MPa** | 10.2 | 13.4 | 10.8 | 9.6 | 11.5 |
| **EB** | **%** | 435 | 289 | 501 | 462 | 429 |
| **TS** | **MPa** | 12.3 | 13.7 | 14.5 | 11.6 | 14.3 |
| **Δ EB** | **%** | 61 | 4 | 43 | 67 | 65 |
| **Δ** T**S** | **%** | -25 | 14.2 | 5.8 | 8.4 | 20.2 |

**Table 8: Glass transition temperature of the vulcanisate**

| | | **V1*** | **V2*** | **V3** | **V4** | **V5** |
|---|---|---|---|---|---|---|
| **Tg** | °C | -28 | -42 | -33 | -45 | -41 |

The vulcanisates of the PEG acrylate-HNBR rubbers according to the invention simultaneously have a low Tg of less than -30°C and a small rise in hardness of less than 10% after storage in coolant. Moreover, there is no dissociation of the termonomers.

Therban^{®}LT 1707 VP does have a low Tg, but also has a high rise in hardness and high gelation after storage in the coolant.

Therban^{®}3407 does have no rise in hardness, but has much too high a Tg.

## Claims

1. Use of a vulcanisable composition for production of a vulcanisate in contact with coolant, **characterized in that** the vulcanisable composition comprises
(i) at least one HNBR-PEG acrylate copolymer and
(ii) at least one peroxide compound,
where the HNBR-PEG acrylate copolymer contains
10% to 35% by weight of α,β-ethylenically unsaturated nitrile units,
15% to 80% by weight of conjugated diene units and
10% to 50% by weight of PEG acrylate units derived from a PEG acrylate of the general Formula (I) 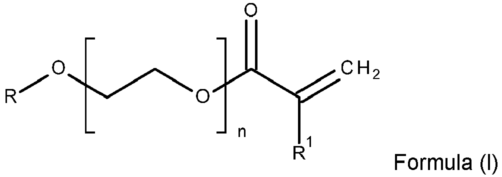 where
R is hydrogen or branched or unbranched C₁-C₂₀-alkyl,
n is 1 to 8, and
R¹ is hydrogen or CH₃-.
wherein the coolant is a composition comprising water, a freezing point depressant, and a corrosion inhibitor.

2. Use of a vulcanisable composition for production of a vulcanisate in contact with coolant according to Claim 1, **characterized in that** the at least one peroxide compound (ii) is an organic peroxide.

3. Use of a vulcanisable composition for production of a vulcanisate in contact with coolant according to any of Claims 1 to 2, **characterized in that** the peroxide compound (ii) is present in an amount of 1 to 20 parts by weight, more preferably in an amount of 2 to 10 parts by weight, based on 100 parts by weight of component (i).

4. Use of a vulcanisable composition for production of a vulcanisate in contact with coolant according to any of Claims 1 to 3, **characterized in that** the HNBR-PEG acrylate copolymer (i) has 18% to 33% by weight of acrylonitrile monomers units, 36% to 69% by weight of 1,3-butadiene monomer units and 13% to 30% by weight of butyldiglycol methacrylate monomer units.

5. Use according to any of Claims 1 to 4, wherein the coolant comprises
a) water,
b) alkyl glycol or salts, preferably ethylene glycol or propylene glycol, and
c) a neutralized organic acid, preferably sodium isononate.

6. Use of a vulcanisate produced from one of the vulcanisable compositions according to any of Claims 1 to 5 for production of a component part, of which at least the vulcanisate is in contact with coolant.

7. Component part comprising a vulcanisate according to Claim 6 in contact with a coolant, produced from a vulcanisable composition, **characterized in that** the vulcanisable composition contains (i) at least one HNBR-PEG acrylate copolymer and (ii) at least one peroxide compound.

8. Cooling unit comprising at least one component part according to Claim 7 and a coolant, wherein the at least one vulcanisate is in contact with the coolant ii).

## Patentansprüche

1. Verwendung einer vulkanisierbaren Zusammensetzung zur Herstellung eines Vulkanisats, das mit Kühlmittel in Kontakt steht, **dadurch gekennzeichnet, dass** die vulkanisierbare Zusammensetzung
(i) mindestens ein HNBR-PEG-Acrylat-Copolymer und
(ii) mindestens eine Peroxidverbindung enthält, wobei das HNBR-PEG-Acrylat-Copolymer 10 bis 35 Gew.-% α,β-ethylenisch ungesättigte Nitrileinheiten,
15 bis 80 Gew.-% konjugierte Dieneinheiten und 10 bis 50 Gew.-% PEG-Acrylateinheiten, die sich von einem PEG-Acrylat der allgemeinen Formel (I) 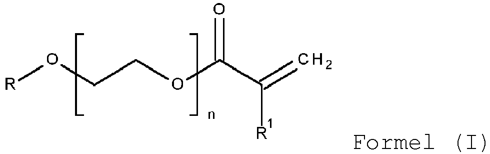 ableiten, wobei
R gleich Wasserstoff oder verzweigtes oder unverzweigtes C₁-C₂₀-Alkyl ist,
n gleich 1 bis 8 ist und
R¹ gleich Wasserstoff oder CH₃- ist, enthält,
wobei es sich bei dem Kühlmittel um eine Zusammensetzung handelt, die Wasser, einen Gefrierpunkterniedriger und einen Korrosionsinhibitor enthält.

2. Verwendung einer vulkanisierbaren Zusammensetzung zur Herstellung eines Vulkanisats, das mit Kühlmittel in Kontakt steht, nach Anspruch 1, **dadurch gekennzeichnet, dass** die mindestens eine Peroxidverbindung (ii) ein organisches Peroxid ist.

3. Verwendung einer vulkanisierbaren Zusammensetzung zur Herstellung eines Vulkanisats, das mit Kühlmittel in Kontakt steht, nach einem der Ansprüche 1 bis 2, **dadurch kennzeichnet, dass** die Peroxidverbindung (ii) in einer Menge von 1 bis 20 Gew.-Teilen, besonders bevorzugt in einer Menge von 2 bis 10 Gew.-Teilen, bezogen auf 100 Gew.-Teile der Komponente (i), vorliegt.

4. Verwendung einer vulkanisierbaren Zusammensetzung zur Herstellung eines Vulkanisats, das mit Kühlmittel in Kontakt steht, nach einem der Ansprüche 1 bis 3, **dadurch gekennzeichnet, dass** das HNBR-PEG-Acrylat-Copolymer (i) 18 bis 33 Gew.% Acrylnitril-Monomereinheiten, 36 bis 69 Gew.-% 1,3-Butadien-Monomereinheiten und 13 bis 30 Gew.-% Butyldiglycolmethacrylat-Monomereinheiten aufweist.

5. Verwendung nach einem der Ansprüche 1 bis 4, wobei das Kühlmittel
a) Wasser,
b) Alkylglycol oder Salze, bevorzugt Ethylenglycol oder Propylenglycol, und
c) eine neutralisierte organische Säure, bevorzugt Natriumisononat, enthält.

6. Verwendung eines aus den vulkanisierbaren Zusammensetzungen nach einem der Ansprüche 1 bis 5 hergestellten Vulkanisats zur Herstellung eines Bauteils, von dem zumindest das Vulkanisat mit Kühlmittel in Kontakt steht.

7. Bauteil umfassend ein Vulkanisat gemäß Anspruch 6, das mit einem Kühlmittel in Kontakt steht, hergestellt aus einer vulkanisierbaren Zusammensetzung, **dadurch gekennzeichnet, dass** die vulkanisierbare Zusammensetzung (i) mindestens ein HNBR-PEG-Acrylat-Copolymer und (ii) mindestens eine Peroxidverbindung enthält.

8. Kühlaggregat umfassend mindestens ein Bauteil gemäß Anspruch 7 und ein Kühlmittel, wobei das mindestens eine Vulkanisat mit dem Kühlmittel ii) in Kontakt steht.

## Revendications

1. Utilisation d'une composition vulcanisable pour la production d'un vulcanisat en contact avec un agent réfrigérant, **caractérisée en ce que** la composition vulcanisable comprend
(i) au moins un copolymère HNBR-acrylate de PEG et
(ii) au moins un composé de type peroxyde,
le copolymère HNBR-acrylate de PEG contenant 10 % à 35 % en poids de motifs de type nitrile éthyléniquement α,β-insaturé,
15 % à 80 % en poids de motifs de type diène conjugué et
10 % à 50 % en poids de motifs de type acrylate de PEG issus d'un acrylate de PEG de la Formule générale (I) 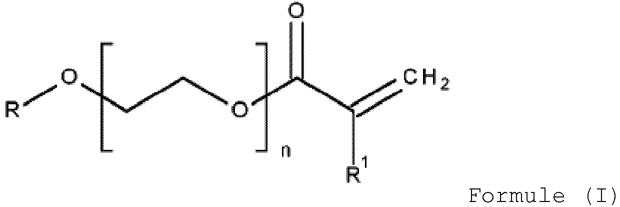 où
R est hydrogène ou C₁-₂₀-alkyle ramifié ou non ramifié,
n est 1 à 8, et
R¹ est hydrogène ou CH₃-,
l'agent réfrigérant étant une composition comprenant de l'eau, un agent d'abaissement du point de congélation, et un inhibiteur de corrosion.

2. Utilisation d'une composition vulcanisable pour la production d'un vulcanisat en contact avec un agent réfrigérant selon la revendication 1, **caractérisée en ce que** l' au moins un composé de type peroxyde (ii) est un peroxyde organique.

3. Utilisation d'une composition vulcanisable pour la production d'un vulcanisat en contact avec un agent réfrigérant selon l'une quelconque des revendications 1 et 2, **caractérisée en ce que** le composé de type peroxyde (ii) est présent en une quantité de 1 à 20 parties en poids, plus préférablement en une quantité de 2 à 10 parties en poids, sur la base de 100 parties en poids du composant (i).

4. Utilisation d'une composition vulcanisable pour la production d'un vulcanisat en contact avec un agent réfrigérant selon l'une quelconque des revendications 1 à 3, **caractérisée en ce que** le copolymère HNBR-acrylate de PEG (i) possède 18 % à 33 % en poids de motifs monomériques d'acrylonitrile, 36 % à 69 % en poids de motifs monomériques de 1,3-butadiène et 13 % à 30 % en poids de motifs monomériques de méthacrylate de butyldiglycol.

5. Utilisation selon l'une quelconque des revendications 1 à 4, l'agent réfrigérant comprenant
a) de l'eau,
b) un alkylglycol ou des sels, préférablement l'éthylèneglycol ou le propylèneglycol, et
c) un acide organique neutralisé, préférablement l'isononate de sodium.

6. Utilisation d'un vulcanisat produit à partir d'une des compositions vulcanisables selon l'une quelconque des revendications 1 à 5 pour la production d'une pièce de composant, dont au moins le vulcanisat est en contact avec un agent réfrigérant.

7. Pièce de composant comprenant un vulcanisat selon la revendication 6 en contact avec un agent réfrigérant, produite à partir d'une composition vulcanisable, **caractérisée en ce que** la composition vulcanisable contient (i) au moins un copolymère HNBR-acrylate de PEG et (ii) au moins un composé de type peroxyde.

8. Unité de refroidissement comprenant au moins une pièce de composant selon la revendication 7 et un agent réfrigérant, l'au moins un vulcanisat étant en contact avec l'agent réfrigérant ii).
